# EUROPEAN PATENT SPECIFICATION

(11) **EP 4 140 067 B1**
(45) Date of publication and mention of the grant of the patent: **28.10.2026**
(21) Application number: 21702835.6
(22) Date of filing: 15.01.2021
(51) Int. Cl.: H04J 13/00, H04B 1/707, H04L 27/00

(54) **REDUCED COMPLEXITY IN GENERATING CHAOTIC SEQUENCES FOR COMMUNICATION SYSTEMS USING SUB-SAMPLING TECHNIQUES**
VERRINGERTE KOMPLEXITÄT BEI DER ERZEUGUNG CHAOTISCHER SEQUENZEN FÜR KOMMUNIKATIONSSYSTEME UNTER VERWENDUNG VON UNTERABTASTUNGSTECHNIKEN
COMPLEXITÉ RÉDUITE DANS LA GÉNÉRATION DE SÉQUENCES CHAOTIQUES POUR DES SYSTÈMES DE COMMUNICATION UTILISANT DES TECHNIQUES DE SOUS-ÉCHANTILLONNAGE

(30) Priority: 22.04.2020 US 202016854980
(43) Date of publication of application: 01.03.2023
(73) Proprietor: Northrop Grumman Systems Corporation, Falls Church, VA 22042 (US)
(72) Inventor: COLE, Ryan, K., Hermosa Beach, CA 90254 (US); WALKER, Christopher, W., Rancho Palos Verdes, CA 90275 (US); PANDYA, Ameesh, N., Los Angeles, CA 90034 (US); HOANG, Yen, M., Anaheim, CA 92804 (US)
(74) Representative: Schmidt, Steffen J.
(86) International application number: PCT/US2021/013615
(87) International publication number: WO 2021/216147

(56) References cited:
- US-A1- 2011 002 364
- US-A1- 2017 163 296
- ANDREAS ABEL ET AL: "Chaos Communications-Principles, Schemes, and System Analysis", PROCEEDINGS OF THE IEEE, IEEE. NEW YORK, US, vol. 90, no. 5, 1 May 2002 (2002-05-01), XP011064997, ISSN: 0018-9219

## Description

### BACKGROUND

### Field

This disclosure relates generally to a chaos sub-sampling system and, more particularly, to a chaos sub-sampling system that creates a plurality of uncorrelated sequences of chaos samples from a single sequence of chaos samples.

### Discussion of the Related Art

Digital communications systems typically map or translate a stream of encoded information bits to be transmitted into a constellation of symbols, where each symbol defines a group of the bits. For example, a symbol mapper may employ M-ary phase shift keying (M-PSK) that provides in-phase and quadrature-phase bits for each symbol that is transmitted. The mapped symbols are then modulated onto a waveform, filtered and converted to an analog signal for transmission. When the analog signal is received by a receiver, the signal is converted to a digital signal to remove the carrier and the digital signal is demodulated to recover the bit symbols, which requires knowledge of the time and position of the individual symbols in the signal to correctly determine the value of each symbol. The information bits are then extracted from the bit symbols.

For certain applications, it is desirable to transmit a data or communications signal without that signal being detected by someone else, such as an adversary, i.e., the adversary does not know that a signal is being transmitted, typically for various low probability of interception/low probability of detection (LPI/LPD) communications applications. One approach is to spread the energy of the transmitted signal, which would normally be transmitted over a relatively narrow frequency band, over a wide frequency band or spectrum, known in the art as direct-sequence spread-spectrum processing, so that the signal energy is washed out in the background and is not readably detectable. Conventionally, spread spectrum systems use a pseudo-noise (PN) sequence for spreading information bits in conjunction with traditional modulation techniques, such as M-PSK, M-ary quadrature amplitude modulation (M-QAM), etc., for the purposes of transmission. Although these techniques do bury the signal below the noise floor, they cannot hide the features that adversaries can detect. A sub-approach for spread-spectrum processing includes spreading the signal with a chaotic sequence to spread out the energy of the transmitted waveform. The modulation techniques employed for the chaotic spread signal is typically conventional modulation and coding, such as M-PSK, M-QAM, etc., which allows a straightforward synchronization between the modulated bits transmitted by the transmitter and the bits received by the receiver using conventional demodulation and decoding.

Alternately, non-conventional techniques such as M-ary chaotic shift keying (M-CSK) can be employed. Chaos communications systems employ modulators that often include multiple chaos generators that each generate a chaotic sequence of samples, where each sequence of samples is used to spread out one of symbols. Each of the generators has a different initial seeding that determines the chaotic sequence of the samples it generates, where the next value of one generator is often the first value of the next generator. These generators are only correlatable to themselves and look like white noise. It is desirable to reduce the complexity of these types of communications systems, and one way of doing that is to reduce the number of chaos generators that are required to provide the necessary chaotic sample sequences.

Prior art is found in US 2017/163296 A1 which generally relates to a method and apparatus for range and coverage extension in a heterogenous digital chaos cooperative network.

### BRIEF DESCRIPTION OF THE DRAWINGS

Figure 1 is a schematic block diagram of a portion of a transmitter including an M-CSK modulator having a chaos sub-sampling system; and
Figure 2 is a schematic block diagram of a portion of a receiver including an M-CSK demodulator having a chaos sub-sampling system.

### DETAILED DESCRIPTION OF THE EMBODIMENTS

The following discussion of the embodiments of the disclosure directed to a chaos sub-sampling system that creates a plurality of uncorrelated sequences of chaos samples from a single sequence of chaos samples is merely exemplary in nature, and is in no way intended to limit the disclosure or its applications or uses. For example, the chaos sub-sampling system is described in connection with a spread-spectrum communications system employing M-CSK chaotic symbol modulation. However, as will be appreciated by those skilled in the art, the chaos sub-sampling system will have other applications.

It has been determined through various practical tests for chaos systems that chaotic sequences can be down-sampled, i.e., sub-sampled sequences, in such a way that they keep their chaotic properties for the purposes of LPI/LPD communications. For example, noise-like featureless structure, strong autocorrelation, weak cross-correlation, etc. More specifically, a particular chaotic sequence can be sub-sampled or sub-sequenced, for example, 4-CSK, by taking every fourth sample of the sequence starting from the first sample, then taking every fourth sample starting from the second sample, and so on to generate four sequences that are chaotic and also do not have any cross-correlation between each other. Sub-sampling can achieved by down-sampling the chaos sequence into M symbols worth of sequences and placing them into memory arrays and sub-sequencing can be achieved by dividing up the chaos sequence into M symbols worth of smaller blocks and placing those into memory arrays. The chaotic sequence is transmitted by a selector that provides an output for one memory array per symbol period. Thus, instead of operating multiple chaos generators for the symbols, a single chaos generator can be employed to generate the several chaos sequences required for a particular number of M-CSK symbols, which saves on redundant hardware and higher processing power.

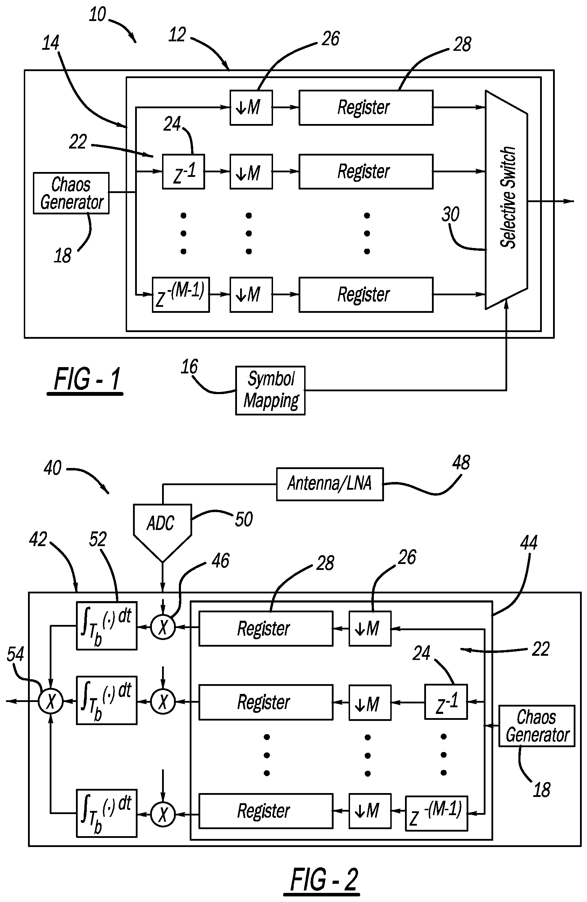

Figure 1 is a schematic block diagram of a portion of a transmitter 10 that is part of, for example, a chaos spread-spectrum communications system. The transmitter 10 includes a chaos modulator 12 that may employ, for example, an M-CSK architecture, to represent symbols as a chaotic sequence of values that spreads the energy of the symbols across a wider spectrum to be below the noise floor, where m-bits per symbol mapping corresponds to the M-CSK, and where M = 2^{m} represents the number of the symbols, although other types of modulators can be employed consistent with the discussion herein. The transmitter 10 also includes a symbol mapper 16 that converts error coded information bits to M-CSK symbols for transmission in a manner well understood by those skilled in the art.

The modulator 12 includes a single pseudo-random number or chaos generator 18 that generates a stream of random numbers or chaos samples at a certain sample rate and that replaces the multiple chaos generators required for each transmitted symbol in the known modulators for these types of communications systems. The modulator 12 also includes a chaos sub-sampling system 14, where the chaos samples from the generator 18 are sub-sampled by the chaos sub-sampling system 14. The stream of chaos samples from the generator 18 is sent to a series of M number of channels 22 in the system 14 to provide the sub-sampling and produce multiple uncorrelated chaotic sample sequences, where the number channels 22 would be four for the 4-CSK example being discussed herein. The sub-sampling system 14 includes a series of M-1 delay devices 24, one for each channel 22 that receive the stream of chaos samples, except the first channel where the samples are not delayed, and where each delay device 24 delays outputting the received chaos samples an additional sample time going from a top one of channels 22 to a bottom one of the channels 22. The delayed stream of chaos samples in each channel 22 are then sent to a sub-sampler 26 that outputs every M^{th} number chaos sample so that the output from the sub-samplers 26 for each sample time is different. The sub-samplers 26 can all sub-sample the sequence of chaos samples at the same interval or at different intervals.

The chaos samples from the sub-samplers 26 in each channel 22 are sent to a register 28 that stores a number of the samples. In one embodiment, the registers 28 store the number of samples that equals a chaos spread factor for a certain spread-spectrum communications system, where the chaos spreading factor determines how much the symbols are spread out, i.e., the number of samples per symbol. Specifically, for a spreading factor of length L, a symbol is represented by L number of chaos bits or samples. In an alternate embodiment, the registers 28 hold one chaos sample such that the registers 28 may not be needed, where the particular channel 22 that is selected remains open until the desired number of samples for signal spreading is output from the modulator 12.

A selection switch 30 receives the chaos samples from each register 28 and an output from the symbol mapper 16 selects the output from one of the registers 28 in one of the channels 22 to be transmitted so that it appears that a different sequence of uncorrelated chaos samples is provided depending on which channel 22 is selected. When a particular register 28 is unloaded, then all of the other registers 28 are cleared and then reloaded for the next register 28 to be unloaded.

The chaotic modulated symbols are then sent to a digital-to-analog converter (DAC) (not shown) that modulates the digital signals onto an analog waveform for transmission. The analog signal is then filtered by an appropriate filter (not shown) and transmitted by an antenna (not shown).

The same type of sub-sampling system is required in the receiver that receives the signal from the transmitter 10 to remove the chaotic sequence and decipher the information bits, where the receiver would also have a single chaos generator that is synchronized to the generator 18. Figure 2 is a schematic block diagram of a portion of a receiver 40 including a demodulator 42 having a sub-sampling system 44 operating in the same manner as the sub-sampling system 14, where like elements are identified by the same reference number. Instead of one of the outputs from the registers 28 being selected at any particular sample point in time, the delayed chaotic sequence from each channel 22 is sent to a separate multiplier 46 along with a received signal from an antenna and low noise amplifier (LNA) 48 that has been converted to a digital signal by an analog-to-digital converter (ADC) 50. The multiplied signals are integrated by an integrator 52 in a known manner by a correlation process. The correlated samples from each of the integrators 52 are then added in a summer 54. A soft or hard decision processor (not shown) removes the bits from the symbols and a decoder (not shown) removes the redundant bits to provide the information bits using known processes from the literature.

## Claims

1. A sub-sampling system (14) comprising:
a plurality of channels (22) each receiving a sequence of chaos samples from a common chaos generator (18);
a delay device (24) in each of a plurality of the plurality of channels (22) that delay the chaos samples at different delay times;
a sub-sampler (26) in all of the channels (22) that receive the delayed chaos samples, each sub-sampler (26) outputting every predetermined one of the chaos samples;
a register (28) in each channel (22) each storing a predetermined number of the sub-sampled chaos samples; and
a selection switch (30) responsive to the stored sub-sampled chaos samples from the registers (28), said selection switch (30) also being responsive to a selection signal output by a symbol mapper (16) that selects one of the registers (28) to output the stored sub-samples chaos samples from the sub-sampling system (14), wherein the selected sub-sampled chaos samples in the register (28) are selected so that it appears that a different sequence of uncorrelated chaos samples is provided depending on which register (28) is selected.

2. The system (14) according to claim 1 wherein each register (28) holds a number of samples determined by a chaos spread factor.

3. The system (14) according to claim 1 wherein the sub-samplers (26) sub-sample every same number of chaos samples; or
wherein the system (14) is part of a modulator (12).

4. The system (14) according to claim 3 wherein the modulator (12) employs an M-ary chaotic shift keying, M-CSK, architecture.

5. The system (14) according to claim 4 wherein the M-CSK architecture is a 4-CSK architecture; or
wherein the number of channels (22) is M number of channels (22).

6. The system (14) according to claim 3 wherein the selection signal is provided by a symbol mapper (16).

7. A modulator (12), in a transmitter including a symbol mapper (16), wherein the modulator employs an M-ary chaotic shift keying, M-CSK, architecture, and wherein the modulator further includes a single chaos generator (18), said modulator (12) comprising:
M-number of channels (22) each receiving a sequence of chaos samples from the single chaos generator (18);
a delay device (24) in all of the channels (22) except one that delay the chaos samples at different delay times;
a sub-sampler (26) in all of the channels (22) that receive the delayed chaos samples, each sub-sampler (26) outputting every predetermined one of the chaos samples;
a register (28) in each channel (22) each storing a predetermined number of the sub-sampled chaos samples; and
a selection switch (30) responsive to the stored sub-sampled chaos samples from the registers (28), said selection switch (30) also being responsive to a selection signal from the symbol mapper (16) that selects one of the registers (28) to output the stored sub-sampled chaos samples from the modulator (12), wherein the sub-sampled chaos samples are selected so that it appears that a different sequence of uncorrelated chaos samples is provided depending on which register (28) is selected.

8. The modulator (12) according to claim 7 wherein each register holds a number of samples determined by a chaos spread factor.

9. The modulator (12) according to claim 7 wherein the sub-samplers (26) sub-sample every same number of chaos samples; or
wherein the M-CSK architecture is a 4-CSK architecture.

10. A communications system comprising:
a transmitter (10) including a modulator (12) that modulates a signal to be transmitted, said modulator (12) including a single transmitter chaos generator (18) and a transmitter sub-sampling sub-system (14), said transmitter sub-sampling sub-system (14) including a plurality of channels (22) each receiving a sequence of chaos samples from the single transmitter chaos generator (18), a delay device (24) in each of a plurality of the plurality of channels (22) that delay the chaos samples at different delay times, a sub-sampler (26) in all of the channels (22) that receive the delayed chaos samples, each sub-sampler (26) outputting every predetermined one of the chaos samples, a register (28) in each channel (22) each storing a predetermined number of the sub-sampled chaos samples, and a selection switch (30) responsive to the stored sub-sampled chaos samples from the registers (28), said selection switch (30) also being responsive to a selection signal output by a symbol mapper (16) that selects one of the registers (28) to output the stored sub-sampled chaos samples to be transmitted by the transmitter (10), wherein the sub-sampled chaos samples in the register (28) are selected so that it appears that a different sequence of uncorrelated chaos samples is provided depending on which register (28) is selected; and
a receiver (40) receiving the transmitted signal and including a demodulator (42) that demodulates the transmitted signal, said demodulator (42) including a single receiver chaos generator and a receiver sub-sampling sub-system (44), said receiver sub-sampling sub-system (44) including a plurality of channels (22) each receiving a sequence of chaos samples from the single receiver chaos generator, a delay device (24) in each of a plurality of the plurality of channels (22) that delay the chaos samples at different delay times, a sub-sampler (26) in all of the channels (22) that receive the delayed chaos samples, each sub-sampler (26) outputting every predetermined one of the chaos samples, said demodulator (42) further including a multiplier (46) in each channel (22) that multiplies the chaos samples by the transmitted signal, and an adder (54) that adds the multiplied signal.

11. The system according to claim 10 wherein each register (28) holds a number of samples determined by a chaos spread factor.

12. The system according to claim 10 wherein the modulator (12) employs an M-ary chaotic shift keying, M-CSK, architecture; or wherein the selection signal is provided by a symbol mapper (16).

13. The system according to claim 12 wherein the number of channels (22) is M number of channels (22).

## Patentansprüche

1. Ein Unterabtastsystem (14), umfassend:
eine Vielzahl von Kanälen (22), von denen jeder eine Folge von Chaos-Abtastwerten von einem gemeinsamen Chaosgenerator (18) empfängt;
ein Verzögerungsgerät (24) in jedem der Vielzahl von Kanälen (22), das die Chaos-Abtastwerte um unterschiedliche Verzögerungszeiten verzögert;
einen Unterabtaster (26) in jedem der Kanäle (22), der die verzögerten Chaos-Abtastwerte empfängt, wobei jeder Unterabtaster (26) jeweils einen vorbestimmten der Chaos-Abtastwerte ausgibt;
ein Register (28) in jedem Kanal (22), das jeweils eine vorbestimmte Anzahl der unterabgetasteten Chaos-Abtastwerte speichert; und
einen Auswahlschalter (30), der auf die gespeicherten, unterabgetasteten Chaos-Abtastwerte aus den Registern (28) anspricht, wobei der Auswahlschalter (30) zudem auf ein von einem Symbol-Mapper (16) ausgegebenes Auswahlsignal anspricht, das eines der Register (28) auswählt, um die gespeicherten, unterabgetasteten Chaos-Abtastwerte aus dem Unterabtastsystem (14) auszugeben, wobei die ausgewählten, unterabgetasteten Chaos-Abtastwerte im Register (28) so ausgewählt werden, dass es den Anschein hat, als würde je nach ausgewähltem Register (28) eine unterschiedliche Folge unkorrelierter Chaos-Abtastwerte bereitgestellt.

2. Das System (14) nach Anspruch 1, wobei jedes Register (28) eine Anzahl von Abtastwerten enthält, die durch einen Chaos-Streufaktor bestimmt wird.

3. Das System (14) nach Anspruch 1, wobei die Unterabtaster (26) jeweils dieselbe Anzahl von Chaos-Abtastwerten unterabtasten; oder
wobei das System (14) Teil eines Modulators (12) ist.

4. Das System (14) nach Anspruch 3, wobei der Modulator (12) eine M-äre chaotische Schiebemodulations, M-CSK, -Architektur verwendet.

5. Das System (14) nach Anspruch 4, wobei die M-CSK-Architektur eine 4-CSK-Architektur ist; oder
wobei die Anzahl von Kanälen (22) M beträgt.

6. Das System (14) nach Anspruch 3, wobei das Auswahlsignal von einem Symbol-Mapper (16) bereitgestellt wird.

7. Ein Modulator (12) in einem Sender, der einen Symbol-Mapper (16) umfasst, wobei der Modulator eine M-äre chaotische Schiebemodulation, M-CSK, - Architektur verwendet und wobei der Modulator ferner einen einzelnen Chaosgenerator (18) umfasst, wobei der Modulator (12) umfasst:
eine M-Anzahl von Kanälen (22), die jeweils eine Folge von Chaos-Abtastwerten von dem einzelnen Chaosgenerator (18) empfangen;
ein Verzögerungsgerät (24) in allen der Kanäle (22) mit Ausnahme eines, der die Chaos-Abtastwerte um unterschiedliche Verzögerungszeiten verzögert;
einen Unterabtaster (26) in allen der Kanäle (22), die die verzögerten Chaos-Abtastwerte empfangen, wobei jeder Unterabtaster (26) jeweils einen vorbestimmten der Chaos-Abtastwerte ausgibt;
ein Register (28) in jedem Kanal (22), das jeweils eine vorbestimmte Anzahl der unterabgetasteten Chaos-Abtastwerte speichert; und
einen Auswahlschalter (30), der auf die gespeicherten, unterabgetasteten Chaos-Abtastwerte aus den Registern (28) anspricht, wobei der Auswahlschalter (30) zudem auf ein Auswahlsignal vom Symbol-Mapper (16) anspricht, das eines der Register (28) auswählt, um die gespeicherten, unterabgetasteten Chaos-Abtastwerte aus dem Modulator (12) auszugeben, wobei die unterabgetasteten Chaos-Abtastwerte so ausgewählt werden, dass es den Anschein hat, als würde je nach ausgewähltem Register (28) eine unterschiedliche Folge unkorrelierter Chaos-Abtastwerte bereitgestellt.

8. Der Modulator (12) nach Anspruch 7, wobei jedes Register eine Anzahl von Abtastwerten enthält, die durch einen Chaos-Streufaktor bestimmt wird.

9. Der Modulator (12) nach Anspruch 7, wobei die Unterabtaster (26) jeweils dieselbe Anzahl von Chaos-Abtastwerten unterabtasten; oder
wobei die M-CSK-Architektur eine 4-CSK-Architektur ist.

10. Ein Kommunikationssystem, umfassend:
ein Sender (10) mit einem Modulator (12), der ein zu sendendes Signal moduliert, wobei der Modulator (12) einen einzelnen Sender-Chaosgenerator (18) und ein Sender-Unterabtast-Untersystem (14) umfasst, wobei das Sender-Unterabtast-Untersystem (14) eine Vielzahl von Kanälen (22) umfasst, von denen jeder eine Folge von Chaos-Abtastwerten von dem einzelnen Sender-Chaosgenerator (18) empfängt, ein Verzögerungsgerät (24) in jedem der Vielzahl von Kanäle (22), das die Chaos-Abtastwerte um unterschiedliche Verzögerungszeiten verzögert, einen Unterabtaster (26) in allen der Kanäle (22), der die verzögerten Chaos-Abtastwerte empfängt, wobei jeder Unterabtaster (26) jeden vorbestimmten der Chaos-Abtastwerte ausgibt, ein Register (28) in jedem Kanal (22), von denen jedes eine vorbestimmte Anzahl der unterabgetasteten Chaos-Abtastwerte speichert, und einen Auswahlschalter (30), der auf die gespeicherten unterabgetasteten Chaos-Abtastwerte aus den Registern (28) anspricht, wobei der Auswahlschalter (30) zudem auf ein von einem Symbol-Mapper (16) ausgegebenes Auswahlsignal anspricht, das eines der Register (28) auswählt, um die gespeicherten unterabgetasteten Chaos-Abtastwerte zur Übertragung durch den Sender (10) auszugeben, wobei die unterabgetasteten Chaos-Abtastwerte im Register (28) so ausgewählt werden, dass es den Anschein hat, als würde je nach ausgewähltem Register (28) eine unterschiedliche Folge unkorrelierter Chaos-Abtastwerte bereitgestellt; und
einen Empfänger (40), der das gesendete Signal empfängt und einen Demodulator (42) umfasst, der das gesendete Signal demoduliert, wobei der Demodulator (42) einen einzelnen Empfänger-Chaosgenerator und ein Empfänger-Unterabtast-Untersystem (44) umfasst, wobei das Empfänger-Unterabtast-Untersystem (44) eine Vielzahl von Kanälen (22) umfasst, von denen jeder eine Folge von Chaos-Abtastwerten von dem einzelnen Empfänger-Chaosgenerator empfängt, sowie ein Verzögerungsgerät (24) in jedem der Vielzahl von Kanälen (22), das die Chaos-Abtastwerte um unterschiedliche Verzögerungszeiten verzögert, einen Unterabtaster (26) in allen der Kanäle (22), der die verzögerten Chaos-Abtastwerte empfängt, wobei jeder Unterabtaster (26) jeden vorbestimmten der Chaos-Abtastwerte ausgibt, wobei der Demodulator (42) ferner einen Multiplizierer (46) in jedem Kanal (22) umfasst, der die Chaos-Abtastwerte mit dem gesendeten Signal multipliziert, sowie einen Addierer (54), der das multiplizierte Signal addiert.

11. Das System nach Anspruch 10, wobei jedes Register (28) eine Anzahl von Abtastwerten enthält, die durch einen Chaos-Streufaktor bestimmt wird.

12. Das System nach Anspruch 10, wobei der Modulator (12) eine M-äre chaotische Schiebemodulations, M-CSK, -Architektur verwendet; oder wobei das Auswahlsignal von einem Symbol-Mapper (16) bereitgestellt wird.

13. Das System nach Anspruch 12, wobei die Anzahl von Kanälen (22) M beträgt.

## Revendications

1. Un système de sous-échantillonnage (14) comprenant :
une pluralité de canaux (22) recevant chacun une séquence d'échantillons chaotiques provenant d'un générateur de chaos commun (18);
un dispositif de retard (24) dans chacun d'une pluralité des canaux (22) qui retarde les échantillons chaotiques selon des temps de retard différents;
un sous-échantillonneur (26) dans chacun des canaux (22) qui reçoit les échantillons chaotiques retardés, chaque sous-échantillonneur (26) délivrant en sortie un échantillon chaotique prédéterminé parmi lesdits échantillons chaotiques;
un registre (28) dans chaque canal (22), chacun stockant un nombre prédéterminé d'échantillons chaotiques sous-échantillonnés ; et
un commutateur de sélection (30) réagissant aux échantillons chaotiques sous-échantillonnés stockés provenant des registres (28), ledit commutateur de sélection (30) réagissant également à un signal de sélection émis par un mappeur de symboles (16) qui sélectionne l'un des registres (28) pour fournir en sortie les échantillons chaotiques sous-échantillonnés stockés provenant du système de sous-échantillonnage (14), dans lequel les échantillons chaotiques sous-échantillonnés sélectionnés dans le registre (28) sont sélectionnés de telle sorte qu'il semble qu'une séquence différente d'échantillons chaotiques non corrélés soit fournie en fonction du registre (28) sélectionné.

2. Le système (14) selon la revendication 1, dans lequel chaque registre (28) contient un nombre d'échantillons déterminé par un facteur d'étalement chaotique.

3. Le système (14) selon la revendication 1, dans lequel les sous-échantillonneurs (26) sous-échantillonnent à chaque fois le même nombre d'échantillons chaotiques ; ou
dans lequel le système (14) fait partie d'un modulateur (12).

4. Le système (14) selon la revendication 3, dans lequel le modulateur (12) utilise une architecture de modulation par déplacement chaotique M-aire, M-CSK.

5. Le système (14) selon la revendication 4, dans lequel l'architecture M-CSK est une architecture 4-CSK ; ou
dans lequel le nombre de canaux (22) est égal à M.

6. Le système (14) selon la revendication 3, dans lequel le signal de sélection est fourni par un mappeur de symboles (16).

7. Un modulateur (12) dans un émetteur comprenant un mappeur de symboles (16), dans lequel le modulateur utilise une architecture de modulation par déplacement chaotique M-aire, M-CSK, et dans lequel le modulateur comprend en outre un seul générateur de chaos (18), ledit modulateur (12) comprenant :
M canaux (22) recevant chacun une séquence d'échantillons chaotiques provenant d'un seul générateur de chaos unique (18);
un dispositif de retard (24) dans tous les canaux (22) sauf un, qui retarde les échantillons chaotiques selon des temps de retard différents;
un sous-échantillonneur (26) dans tous les canaux (22) qui reçoivent les échantillons chaotiques retardés, chaque sous-échantillonneur (26) délivrant en sortie un échantillon chaotique prédéterminé parmi lesdits échantillons chaotiques;
un registre (28) dans chaque canal (22), chacun stockant un nombre prédéterminé d'échantillons chaotiques sous-échantillonnés ; et
un commutateur de sélection (30) réagissant aux échantillons chaotiques sous-échantillonnés stockés provenant des registres (28), ledit commutateur de sélection (30) réagissant également à un signal de sélection provenant du mappeur de symboles (16) qui sélectionne l'un des registres (28) pour fournir en sortie les échantillons chaotiques sous-échantillonnés stockés provenant du modulateur (12), les échantillons chaotiques sous-échantillonnés étant sélectionnés de telle sorte qu'il semble qu'une séquence différente d'échantillons chaotiques non corrélés soit fournie en fonction du registre (28) sélectionné.

8. Le modulateur (12) selon la revendication 7, dans lequel chaque registre contient un nombre d'échantillons déterminé par un facteur d'étalement chaotique.

9. Le modulateur (12) selon la revendication 7, dans lequel les sous-échantillonneurs (26) sous-échantillonnent à chaque fois le même nombre d'échantillons chaotiques ; ou
dans lequel l'architecture M-CSK est une architecture 4-CSK.

10. Un système de communication comprenant :
un émetteur (10) comprenant un modulateur (12) qui module un signal à émettre, ledit modulateur (12) comprenant un seul générateur de chaos d'émetteur unique (18) et un sous-système de sous-échantillonnage d'émetteur (14), ledit sous-système de sous-échantillonnage d'émetteur (14) comprenant une pluralité de canaux (22) recevant chacun une séquence d'échantillons chaotiques provenant du seul générateur de chaos unique d'émetteur (18), un dispositif de retard (24) dans chacun d'une pluralité desdits canaux (22) qui retarde les échantillons chaotiques selon des temps de retard différents, un sous-échantillonneur (26) dans tous les canaux (22) qui reçoit les échantillons chaotiques retardés, chaque sous-échantillonneur (26) délivrant en sortie un échantillon chaotique prédéterminé parmi les échantillons chaotiques, un registre (28) dans chaque canal (22), chacun stockant un nombre prédéterminé d'échantillons chaotiques sous-échantillonnés, et un commutateur de sélection (30) réagissant aux échantillons chaotiques sous-échantillonnés stockés provenant des registres (28), ledit commutateur de sélection (30) réagissant également à un signal de sélection émis par un mappeur de symboles (16) qui sélectionne l'un des registres (28) afin de fournir en sortie les échantillons chaotiques sous-échantillonnés stockés destinés à être transmis par l'émetteur (10), les échantillons chaotiques sous-échantillonnés dans le registre (28) étant sélectionnés de telle sorte qu'il semble qu'une séquence différente d'échantillons chaotiques non corrélés soit fournie en fonction du registre (28) sélectionné; et
un récepteur (40) recevant le signal transmis et comprenant un démodulateur (42) qui démodule le signal transmis, ledit démodulateur (42) comprenant un générateur de chaos de récepteur unique et un sous-système de sous-échantillonnage de récepteur (44), ledit sous-système de sous-échantillonnage du récepteur (44) comprenant une pluralité de canaux (22) recevant chacun une séquence d'échantillons chaotiques provenant du seul générateur de chaos unique du récepteur, un dispositif de retard (24) dans chacun d'une pluralité des canaux (22) qui retarde les échantillons chaotiques selon des temps de retard différents, un sous-échantillonneur (26) dans tous les canaux (22) qui reçoivent les échantillons chaotiques retardés, chaque sous-échantillonneur (26) délivrant en sortie un échantillon chaotique prédéterminé parmi lesdits échantillons chaotiques, ledit démodulateur (42) comprenant en outre un multiplicateur (46) dans chaque canal (22) qui multiplie les échantillons chaotiques par le signal transmis, et un additionneur (54) qui additionne le signal multiplié.

11. Le système selon la revendication 10, dans lequel chaque registre (28) contient un nombre d'échantillons déterminé par un facteur d'étalement chaotique.

12. Le système selon la revendication 10, dans lequel le modulateur (12) utilise une architecture de modulation par déplacement chaotique M-aire, M-CSK; ou dans lequel le signal de sélection est fourni par un mappeur de symboles (16).

13. Le système selon la revendication 12, dans lequel le nombre de canaux (22) est égal à M.
